# EUROPEAN PATENT APPLICATION

(11) **EP 3 348 127 A1**
(43) Date of publication of application: **18.07.2018**
(21) Application number: 16844019.6
(22) Date of filing: 24.06.2016
(51) Int. Cl.: A01B 33/08, A01B 33/02

(54) **TILLING APPARATUS OF PLANT HUSBANDRY MACHINE**

(30) Priority: 09.09.2015 JP 2015178009
(71) Applicant: Yanmar Co., Ltd., Osaka-shi, Osaka 530-8311 (JP)
(72) Inventor: HIRASAWA Kazuaki, Osaka-shi Osaka 530-8311 (JP); SEKI Takahiro, Osaka-shi Osaka 530-8311 (JP); IKAI Koji, Osaka-shi Osaka 530-8311 (JP); NISHIMURA Shuji, Osaka-shi Osaka 530-8311 (JP); NIU Hidekazu, Osaka-shi Osaka 530-8311 (JP); SATO Osamu, Mishima-shi Shizuoka 411-0816 (JP)
(74) Representative: Jostarndt Patentanwalts-AG
(86) International application number: PCT/JP2016/068840
(87) International publication number: WO 2017/043153

(57) **Abstract**

An object is to provide an axle drive type tilling apparatus capable of increasing a tilling efficiency. Four rows each including a pair of tilling claws 7 are provided such that first-row tilling claws (AIR, A2R), second-row tilling claws (B1L, B2R), third-row tilling claws (C1L, C2R), and fourth-row tilling claws (D1L, D2L) are arranged in this order from the machine body outer side to the machine body inner side, with the phase shifted by 45 degrees in a side view. Both of the first-row tilling claws (AIR, A2R) are supported on a first support member 21 so as to be oriented toward the outer side. Of the second-row tilling claws (B1L, B2R), the tilling claw (B1L) is supported on the first support member 21 so as to be oriented toward the inner side, and the tilling claw (B2R) is supported on the second support member 22 so as to be oriented toward the outer side. Of the third-row tilling claws (C1L, C2R), the tilling claw (C1L) is supported on the second support member 22 so as to be oriented toward the inner side, and the tilling claw (C2R) is supported on the third support member 23 so as to be oriented toward the outer side. Both of the fourth-row tilling claws (D1L, D2L) are supported on the third support member 23 so as to be oriented toward the inner side.

## Description

### Technical Field

The present invention relates to a technique for increasing a tilling efficiency by improving an arrangement of tilling claws in a walking-type husbandry machine in which tilling claws are disposed on an axle such that traveling and tilling can be simultaneously performed.

### Background Art

According to a conventionally known technique, an engine is disposed on a machine body frame which is provided at the center of a machine body of a husbandry machine; a transmission case is vertically disposed at the rear of the engine; a tilling shaft serving also as an axle is pivotally supported below the transmission case in a laterally horizontal direction; a plurality of tilling claws are fixed to the tilling shaft; and the tilling shaft is rotationally driven by power of the engine, to perform a tilling work (for example, Patent Literature 1 (PTL 1)).

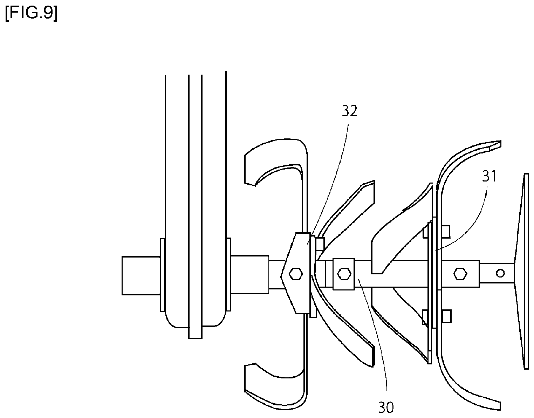

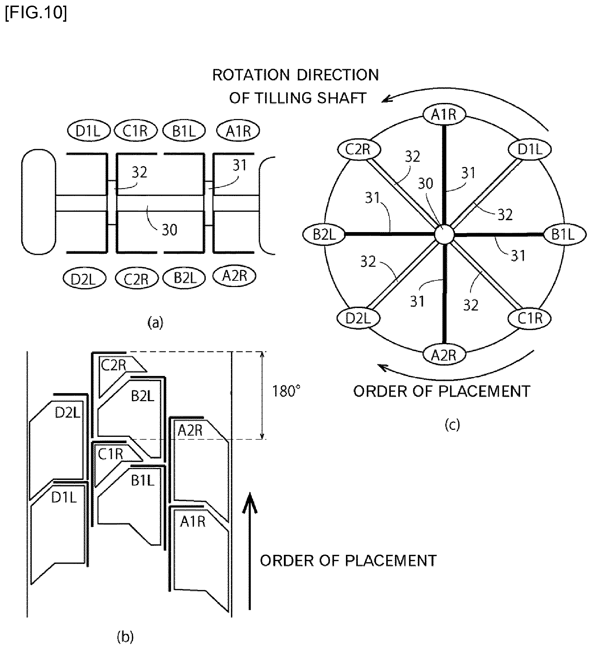

In a tilling apparatus of the conventional husbandry machine, as shown in FIG. 9 and FIG. 10, central portions of two support plates 31, 32 which are outer and inner ones are fixed at a predetermined interval onto a tilling shaft 30 on one side with respect to the lateral direction, and a pair of tilling claws is fixed to each of an outside surface and an inside surface of each of the outer and inner support plates 31, 32 in such a manner that eight tilling claws in total are fixed with the phase shifted by 180 degrees.

In detail, in this arrangement of the tilling claws, first-row tilling claws AIR, A2R which are the outermost are fixed with bolts to the outside surface of the support plate 31 with their distal ends being bent outward and with the phase shifted by 180 degrees. Second-row tilling claws B1L, B2L which are the second outermost are fixed with bolts to the inside surface of the support plate 31 with their distal ends being bent inward and with the phase shifted by 180 degrees. The tilling claws B1L, B2L are arranged with the phase shifted by 90 degrees relative to the first-row tilling claws AIR, A2R. Third-row tilling claws C1R, C2R which are the third outermost are fixed with bolts to the outside surface of the support plate 32 with their distal ends being bent outward and with the phase shifted by 180 degrees. The tilling claws C1R, C2R are arranged with the phase shifted by 45 degrees relative to the second-row tilling claws B1L, B2L. Fourth-row tilling claws D1L, D2L which are the fourth outermost are fixed with bolts to the inside surface of the support plate 32 with their distal ends being bent inward and with the phase shifted by 180 degrees. The tilling claws D1L, D2L are arranged with the phase shifted by 90 degrees relative to the third-row tilling claws C1R, C2R. In this manner, the tilling claws are fixed respectively to the support plates 31, 32 such that the distal ends of the tilling claws protrude alternately leftward and rightward, and the tilling claws are fixed while being arranged with the phase shifted by 45 degrees so as not to overlap in a side view.

### Citation List

### Patent Literature

PTL 1: Japanese Patent Application Laid-Open No. 2001-320902

### Summary of Invention

### Technical Problem

In the tilling apparatus of Patent Literature 1, as shown in an exploded view of FIG. 10(b) showing placement of the tilling claws, the areas where the third-row tilling claws C1R and C2R which are the third outermost are placed are smaller than the areas where the other tilling claws are placed. In other words, the work volume of the third-row tilling claws C1R, C2R which are the third outermost is smaller. As a result, the wear of the third-row tilling claws C1R, C2R which are the third outermost is smaller, and different from the wear of the other tilling claws, which causes a variation in the time for replacement. In addition, a large torque variation occurs in the work, and thus the behavior is unstable.

The tilling claws are attached such that they are bent alternately leftward and rightward on the respective support plates 31, 32. As shown in FIG. 10(c), when rotated, the bending direction of the tilling claws is AIR (right) → D1L (left) → B1L (left) → C1R (right) → A2R (right) → D2L (left) → B2L (left) → C2R (right) → AIR (right) in this order starting from the tilling claw AIR. That is, the tilling claws are not always placed so as to be bent alternately leftward and rightward. Thus, the lateral swing is not stabilized, which causes vibrations.

### Solution to Problem

A tilling apparatus of a husbandry machine according to an aspect of the present invention includes: a tilling shaft that horizontally extends in a direction perpendicular to a traveling direction of a machine body, the tilling shaft being coupled to a driving unit and rotationally driven by the driving unit; a plurality of support members fixed onto the tilling shaft, and including a first support member, a second support member, and a third support member arranged in this order from the machine body outer side to the machine body inner side; and a pair of tilling claw s attached to each of the plurality of support members so as to be oriented toward the machine body outer side or the machine body inner side, the pair of tilling claws being arranged with the phase shifted by 180 degrees in a side view, wherein four rows each including the pair of tilling claws are provided such that first-row tilling claws, second-row tilling claws, third-row tilling claws, and fourth-row tilling claws are arranged in this order from the machine body outer side to the inner side, with the phase shifted by 45 degrees in a side view, both of the first-row tilling claws are supported on the first support member so as to be oriented toward the machine body outer side, of the second-row tilling claws, one tilling claw is supported on the first support member so as to be oriented toward the machine body inner side, and the other tilling claw is supported on the second support member so as to be oriented toward the machine body outer side, of the third-row tilling claws, one tilling claw is supported on the second support member so as to be oriented toward the machine body inner side, and the other tilling claw is supported on the third support member so as to be oriented toward the machine body outer side, and both of the fourth-row tilling claws are supported on the third support member so as to be oriented toward the inner side.

In the tilling apparatus of the husbandry machine according to the aspect of the present invention, it is preferable that: the second support member includes a first flange to which the one tilling claw of the second-row tilling claws is attached and a second flange to which the other tilling claw of the third-row tilling claws is attached; and the first flange and the second flange are fixed to the tilling shaft with the phase shifted by 45 degrees in a side view.

In the tilling apparatus of the husbandry machine according to the aspect of the present invention, it is preferable that the tilling shaft is separable at a middle position with respect to the axial direction thereof, the separation being made with the first support member and the first flange integrated.

### Advantageous Effects of Invention

The tilling apparatus of the husbandry machine according to the aspect of the present invention allows the plurality of tilling claws attached to the tilling shaft to be worn substantially evenly, which can make the claws long-lasting. In addition, during a work, a torque variation is small, and thus an efficient use of the engine horsepower is enabled, so that the fuel consumption can be improved. Moreover, the behavior is stabilized, and fatigue of a work operator can be reduced.

### Brief Description of Drawings

[FIG. 1] An overall side view of a husbandry machine including a tilling apparatus of the present invention.
[FIG. 2] A rear view of the tilling apparatus on one side with respect to the lateral direction.
[FIG. 3] A side view of a tilling shaft with tilling claws attached.
[FIG. 4] A perspective view of the same.
[FIG. 5] A schematic diagram showing an arrangement of the tilling claws and the areas where the tilling claws are placed.
[FIG. 6] A schematic diagram showing an arrangement and placement areas according to another embodiment.
[FIG. 7] A rear view showing a state where an inner part and an outer part of the tilling apparatus on one side with respect to the lateral direction are separated from each other.
[FIG. 8] A rear view showing a state where intertillage is performed by the inner part of the tilling apparatus.
[FIG. 9] A rear view of a conventional tilling apparatus on one side with respect to the lateral direction.
[FIG. 10] A schematic diagram showing an arrangement of tilling claws and the areas where the tilling claws are placed according to a conventional technique.

### Description of Embodiments

Some embodiments of a husbandry machine 1 including a tilling apparatus 10 of the present invention will now be described. The description will be given with the forward direction denoted by F direction.

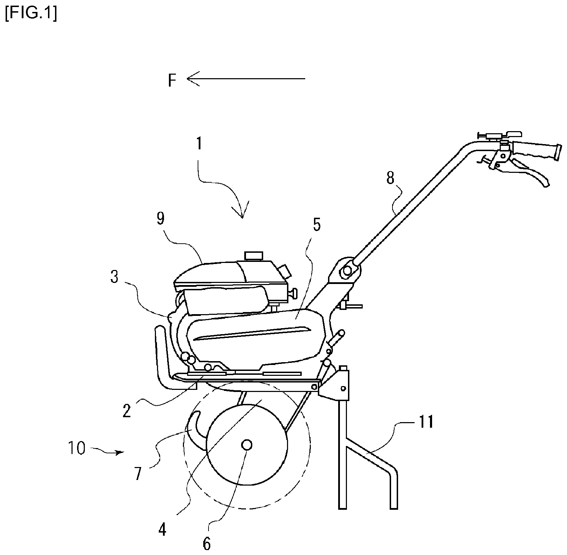

Referring to FIG. 1, the husbandry machine 1 is capable of power transmission by a configuration in which: an engine 3 is mounted on a machine body frame 2; a transmission case 4 stands at the rear of the engine 3 and in a central region of the machine body frame 2 with respect to a lateral (left-right) direction; and a transfer case 5 is arranged between the engine 3 and a region above the transmission case 4. Below the transmission case 4, a tilling shaft 6 is horizontally laid in the laterally direction, and in other words, the tilling shaft 6 is disposed perpendicularly to the F direction which is a traveling direction, and onto the tilling shaft 6, tilling claws 7, 7, ... are fixed in a radial fashion, to constitute the tilling apparatus 10.

A proximal portion of the steering part 8 is secured to an upper portion of the transmission case 4. The steering part 8 protrudes obliquely upward to the rear, and the steering part 8 has, in a rear portion thereof, a grip in which a clutch lever, an acceleration lever, and the like, are arranged. A fuel tank 9 is disposed above the engine 3. Behind the machine body frame 2, a resistance rod 11 is attached with its vertical height adjustable.

Next, the tilling apparatus 10 which is a principal part of the present invention will be detailed. The tilling apparatus 10 is laterally symmetric, and thus a right part thereof will be described.

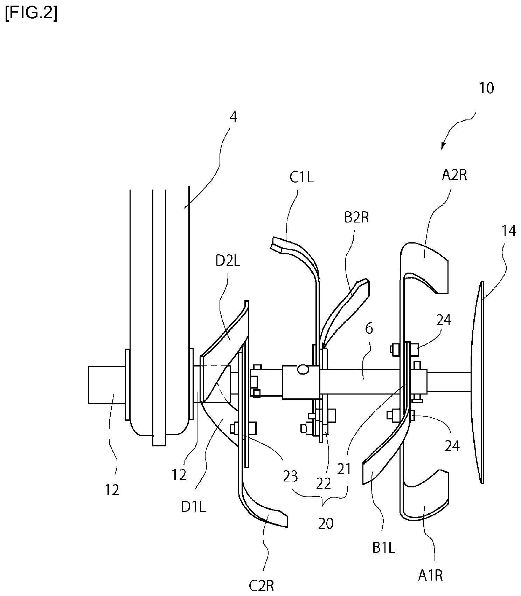

As shown in FIG. 2, an output shaft 12 horizontally protrudes in the lateral direction from a lower side surface of the transmission case 4, and laterally one end of the tilling shaft 6 is fixed to the output shaft 12. The tilling claws 7, 7, ... are secured onto the tilling shaft 6 with interposition of a support part 20, and a gauge wheel 14 is fixed to the laterally other end of the tilling shaft 6.

The support part 20 includes a first support member 21, a second support member 22, and a third support member 23, which are arranged on the tilling shaft 6 in parallel and at predetermined intervals sequentially from the outer side. Each of the first support member 21 and the third support member 23 has three tilling claws 7, 7, 7 attached, and the second support member 22 has two tilling claws 7, 7 attached. In total, eight tilling claws 7, 7, ... are attached onto the tilling shaft 6 on one side with respect to the lateral direction, with the phase shifted by 45 degrees in a side view.

The first support member 21 is formed of a substantially square plate member, whose central portion is fixed to the tilling shaft 6, and fixing holes 21a, 21a, ... are opened respectively in the four vertexes (corner portions) on the outer periphery of the first support member 21. The fixing holes 21a, 21a, ... are arranged with the phase shifted by 90 degrees about the shaft center of the tilling shaft 6.

Fixing holes which are opened in a proximal portion of the tilling claw 7 are positioned to two adjacent fixing holes 21a, 21a, and fixed with bolts 24, 24. Here, how to fix is not limited, and the fixing may be made by using, for example, pins.

The second support member 22 has two plate members (first flange 22a, second flange 22b), and each of the plate members has the same configuration as that of the first support member 21. The third support member 23 also has the same configuration as that of the first support member 21, and thus descriptions of their configurations are omitted.

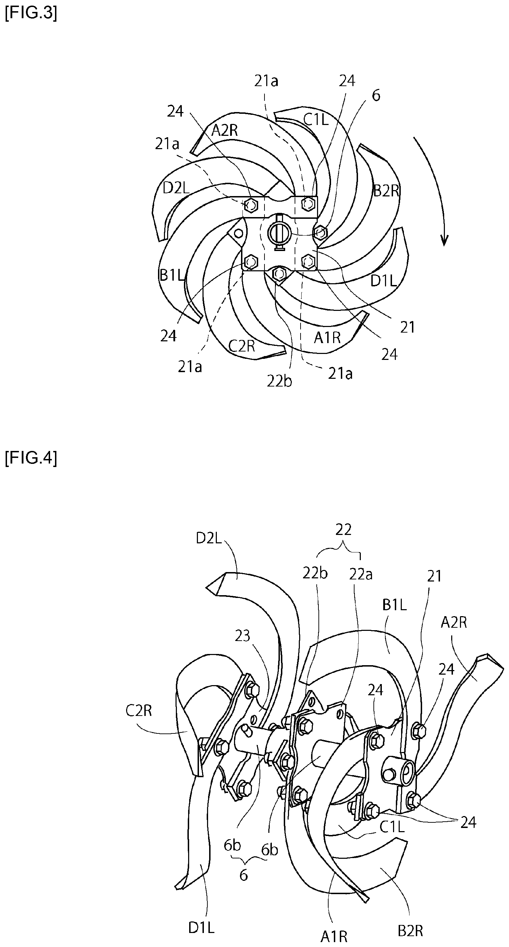

The tilling claws 7 are claws having machete-like shapes, with their distal ends being bent rightward or leftward. That is, there are two types of the tilling claws 7, namely, the type bent rightward and the type bent leftward, and the number of each type of tilling claws 7 arranged on the tilling shaft 6 is the same. An arranging configuration (arrangement) of the tilling claws 7, 7, ... will be described with FIG. 3, FIG. 4, and FIG. 5. From the right side, the first row is defined as A, the second row is defined as B, the third row is defined as C, and the fourth row is defined as D. Two tilling claws included in the same row are sequentially numbered 1, 2. A tilling claw whose distal end is bent rightward is labeled R, and a tilling claw whose distal end is bent leftward is labeled L.

In a first embodiment of the present invention, the tilling claw AIR and the tilling claw A2R included in the first row, whose distal ends are bent outward (rightward), are attached to one side surface (in this embodiment, a left side surface) of the first support member 21 with the bolts 24, 24, 24, 24 with the phase shifted by 180 degrees. The tilling claw B1L included in the second row, whose distal end is bent inward (leftward), is attached to the other side surface of the first support member 21 at a location between the tilling claw AIR and the tilling claw A2R, with the bolts 24, 24 with the phase shifted by 90 degrees.

Considering the bending width of the tilling claws 7 from the first support member 21, the second support member 22 (the first flange 22a and the second flange 22b) are fixed onto the tilling shaft 6, and the tilling claw B2R whose distal end is bent outward (rightward) is fixed to the outer first flange 22a with bolts with the phase shifted by 180 degrees relative to the tilling claw B1L included in the second row. The first flange 22a is arranged on the tilling shaft 6 such that its fixing holes have the same phase as the phase of the fixing holes 21a of the first support member 21. The second flange 22b is arranged with the phase shifted by 45 degrees relative to the first flange 22a about the tilling shaft 6. In this manner, the tilling claw C1L included in the third row, whose distal end is bent inward (leftward), is attached to the second flange 22b with the phase shifted by 45 degrees relative to the tilling claw B2R.

Considering the bending width of the tilling claws 7, at a predetermined interval from the second flange 22b, the third support member 23 is fixed onto the tilling shaft 6, and the tilling claw C2R included in the third row, whose distal end is bent outward (rightward), is fixed to one side surface of the third support member 23 with bolts with the phase shifted by 180 degrees relative to the tilling claw C1L. The tilling claws D1L, D2L included in the fourth row, whose distal ends are bent inward (leftward), are fixed to the other side surface of the third support member 23 with bolts with the phase shifted by 90 degrees relative to the tilling claw C2R. The tilling claw D1L and the tilling claw D2L are fixed with the phase shifted by 180 degrees. Fixing holes of the third support member 23 have the same phase as the phase of the fixing holes of the second flange 22b. The shape of the support part 20 is not limited to a square but may be a circle, as long as the fixing holes are phase-shifted by 90 degrees (or 45 degrees) around a concentric circle.

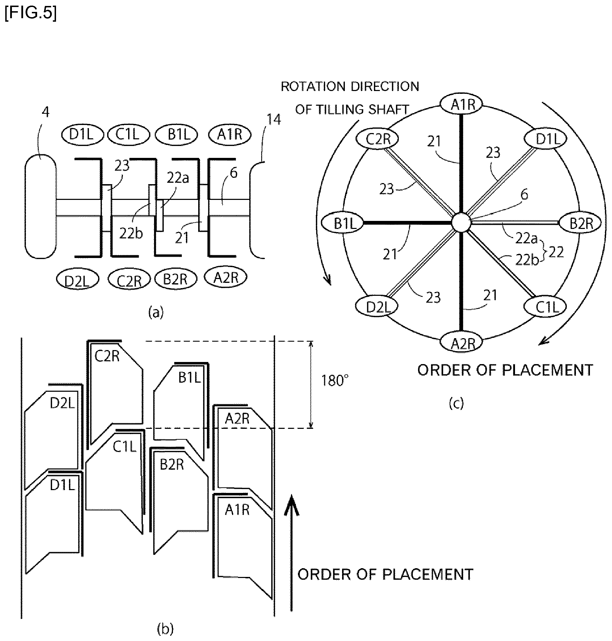

When the tilling apparatus 10 having such a configuration performs a tilling work, as shown in FIG. 5(b), the areas where the respective tilling claws 7, 7, ... are placed are substantially equal, so that their respective work volumes are substantially equal, which enables the work to be performed efficiently, and the tilling claws 7, 7, ... are worn evenly. As shown in FIG. 5(c), the leftward or rightward bending direction of the tilling claws 7 with respect to the order in which the tilling claws 7 are placed is AIR (right) → D1L (left) → B2R (right) → C1L (left) → A2R (right) → D2L (left) → B1L (left) → C2R (right) → AIR (right). Thus, the number of times of alternate placement of right and left is increased as compared with the conventional. In other words, the number of times of consecutive placement of right and right or left and left is reduced, so that a torque variation decreases, which can reduce vibrations and fatigue.

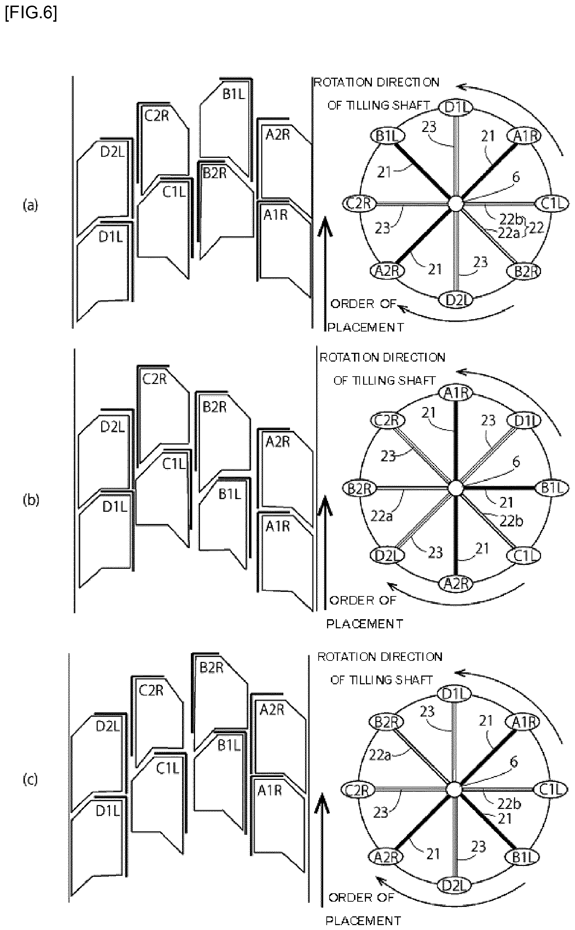

As shown in FIG. 6, the tilling claws 7, by being arranged, can provide the same effects as described above.

As for the arrangement of the tilling claws 7, there are a second embodiment shown in FIG. 6(a), a third embodiment shown in FIG. 6(b), and a fourth embodiment shown in FIG. 6(c). In any of the embodiments, eight tilling claws 7, 7, ... in total are arranged on the tilling shaft 6 at intervals of 45 degrees. The embodiments can make the placement areas substantially equal while being identical in terms of the number of tilling claws 7 attached to the first support member 21, the second support member 22, and the third support member 23, the leftward or rightward direction in which the distal ends are bent, and the phase (180 degrees) of attachment of the tilling claws 7 in each row while being different in terms of the angle of attachment in each support member 21, 22, 23, and the order of placement into a field plane.

In the second embodiment, as seen from the diagram of FIG. 6(a) showing the placement areas, an arrangement is a laterally inverted version of the arrangement of the first embodiment. As compared with the state of the first embodiment, the first support member 21 and the first flange 22a of the second support member 22 are rotated clockwise by 90 degrees relative to the third support member 23 and the second flange 22b of the second support member 22, and fixed. In this manner, the arrangement is made such that the tilling claws 7 are placed in the order of D1L→A1R→C1L→B2R→D2L→A2R→C2R→B1L→D1L.

In the third embodiment, as shown in FIG. 6(b), an arrangement is made in which the positions where the tilling claw B1L and the tilling claw B2R are attached are shifted by 180 degrees relative to the first embodiment. Therefore, as compared with the state of the first embodiment, the tilling claw B1L is attached on the first support member 21 with the phase shifted by 180 degrees, and the tilling claw B2R is attached on the second support member 22 with the phase shifted by 180 degrees. In this manner, the arrangement is made such that the tilling claws 7 are placed in the order of A1R→D1L→B1L→C1L→A2R→D2L→B2R→C2R→A1R.

In the fourth embodiment, as shown in FIG. 6(c), an arrangement is a laterally inverted version of the arrangement of the third embodiment. As compared with the state of the second embodiment, the positions where the tilling claw B1L and the tilling claw B2R are attached are shifted by 180 degrees. In this manner, the arrangement is made such that the tilling claws 7 are placed in the order of D1L→A1R→C1L→B1L→D2L→A2R→C2R→B2R→D1L.

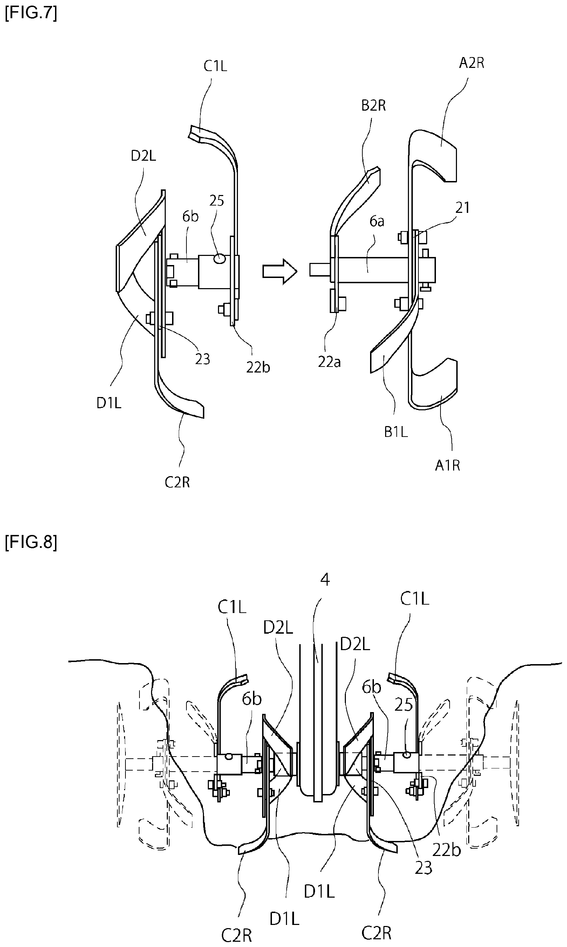

As shown in FIG. 7 and FIG. 8, the tilling shaft 6 is separable in the lateral direction, and capable of an intertillage work by removing an outside part. That is, the tilling shaft 6 is separable into an outside tilling shaft 6a and an inside tilling shaft 6b, and the inner end of the inside tilling shaft 6b is fixed to the output shaft 12 of the transmission case 4 while the inner end of the outside tilling shaft 6a is inserted into the outer end of the inside tilling shaft 6b such that they can be fixed while being fitted to each other with a pin 25. Here, how to fix is not limited, and the fixing may be made by using, for example, a bolt.

The first support member 21 is fixed onto the outer end of the outside tilling shaft 6a, and the tilling claws AIR, A2R, B1L are attached onto the first support member 21 in the above-described manner. The first flange 22a of the second support member 22 is fixed onto the inner end of the outside tilling shaft 6a, and the tilling claw B2R is fixed onto the first flange 22a.

The second flange 22b is fixed onto the outer end of the inside tilling shaft 6b, and the tilling claw C1L is attached onto the second flange 22b in the above-described manner. The third support member 23 is fixed onto the inner end of the inside tilling shaft 6b, and the tilling claws C2R, D1L, D2L are fixed in the above-described manner.

Removing the left and right pins 25, 25, detaching the outside tilling shafts 6a, 6a, and rotationally driving the eight tilling claws 7, 7, ... disposed on the left and right inside tilling shafts 6b, 6b enables tilling and weeding to be performed in a furrow.

As thus far described, the tilling apparatus 10 includes: the tilling shaft 6 that horizontally extends in a direction perpendicular to the traveling direction of the machine body, the tilling shaft 6 being coupled to the engine 3 serving as a driving unit and rotationally driven by the driving unit; the first support member 21, the second support member 22, and the third support member 23 fixed onto the tilling shaft 6, and arranged in this order from the outer side with respect to the lateral direction of the machine body; and four pairs of tilling claws 7, 7, ... provided in each of left and right parts of the tilling apparatus 10, the pairs of tilling claws 7, 7, ... being attached to the support member 21, 22, 23 so as to be oriented toward the outer side or the inner side, each of the pairs of tilling claws 7, 7, ... having the phase displaced by 180 degrees in a side view, wherein: eight tilling claws constituting first to fourth rows of tilling claws 7, 7, ... on one side with respect to the lateral direction are displaced from one another by 45 degrees in a side view; both of the first-row tilling claws (AIR, A2R) are supported on the first support member 21 so as to be oriented toward the outer side; of the second-row tilling claws (B1L, B2R), one tilling claw (B1L) is supported on the first support member 21 so as to be oriented toward the inner side, and the other tilling claw (B2R) is supported on the second support member 22 so as to be oriented toward the outer side; of the third-row tilling claws (C1L, C2R), one tilling claw (C1L) is supported on the second support member 22 so as to be oriented toward the inner side, and the other tilling claw (C2R) is supported on the third support member 23 so as to be oriented toward the outer side; and both of the fourth-row tilling claws (D1L, D2L) are supported on the third support member 23 so as to be oriented toward the inner side. Accordingly, the amounts by which the plurality of tilling claws 7, 7, ... attached to the tilling shaft 6 function are substantially equal, and thus the wears of the respective tilling claws 7, 7, ... are also substantially equal, which can make the tilling claws 7 long-lasting. In addition, during a work, a torque variation is small, and thus an efficient use of the engine horsepower is enabled, so that the fuel consumption can be improved. Moreover, the behavior is stabilized, and fatigue of a work operator can be reduced.

The second support member 22 includes the first flange 22a to which the tilling claw (B2R) is attached and the second flange 22b to which the tilling claw (C1L) is attached, and the first flange 22a and the second flange 22b are fixed to the tilling shaft 6 with the phase shifted by 45 degrees in a side view. This makes it easy to divide the tilling apparatus 10 in the middle thereof, and four tilling claws 7 can be arranged in a balanced manner on each of the tilling shafts 6a, 6b obtained after separation.

The tilling shaft 6 is separable at a middle position with respect to the axial direction thereof, the separation being made such that the first support member 21 and the first flange 22a are integrated while the second flange 22b and the third support member 23 are integrated. Accordingly, by separating the tilling shaft 6 and removing the outer parts thereof, the tilling width can be easily narrowed, and works in a furrow, etc. can be easily performed.

### Industrial Applicability

The present invention is applicable to a tilling apparatus of a husbandry machine.

### Reference Signs List

- 3: engine
- 6: tilling shaft
- 7: tilling claw
- 10: tilling apparatus
- 21: first support member
- 22: second support member
- 22a: first flange
- 22b: second flange
- 23: third support member
- AIR, A2R: first-row tilling claws
- B1L, B2R: second-row tilling claws
- C1L, C2R: third-row tilling claws
- D1L, D2L: fourth-row tilling claws

## Claims

1. A tilling apparatus of a husbandry machine, the tilling apparatus comprising:
a tilling shaft that horizontally extends in a direction perpendicular to a traveling direction of a machine body, the tilling shaft being coupled to a driving unit and rotationally driven by the driving unit;
a plurality of support members fixed onto the tilling shaft, and including a first support member, a second support member, and a third support member arranged in this order from the machine body outer side to the machine body inner side; and
a pair of tilling claws attached to each of the plurality of support members so as to be oriented toward the machine body outer side or the machine body inner side, the pair of tilling claws being arranged with the phase shifted by 180 degrees in a side view, wherein
four rows each including the pair of tilling claws are provided such that first-row tilling claws, second-row tilling claws, third-row tilling claws, and fourth-row tilling claws are arranged in this order from the machine body outer side to the inner side, with the phase shifted by 45 degrees in a side view,
both of the first-row tilling claws are supported on the first support member so as to be oriented toward the machine body outer side,
of the second-row tilling claws, one tilling claw is supported on the first support member so as to be oriented toward the machine body inner side, and the other tilling claw is supported on the second support member so as to be oriented toward the machine body outer side,
of the third-row tilling claws, one tilling claw is supported on the second support member so as to be oriented toward the machine body inner side, and the other tilling claw is supported on the third support member so as to be oriented toward the machine body outer side, and
both of the fourth-row tilling claws are supported on the third support member so as to be oriented toward the inner side.

2. The tilling apparatus of the husbandry machine according to claim 1, wherein
the second support member includes a first flange to which the one tilling claw of the second-row tilling claws is attached and a second flange to which the other tilling claw of the third-row tilling claws is attached, and the first flange and the second flange are fixed to the tilling shaft with the phase shifted by 45 degrees in a side view.

3. The tilling apparatus of the husbandry machine according to claim 1, wherein
the tilling shaft is separable at a middle position with respect to the axial direction thereof, the separation being made with the first support member and the first flange integrated.
